(19) Europäisches Patentamt / European Patent Office / Office européen des brevets

(11) EP 1 904 566 B1

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **06763726.4**

(22) Anmeldetag: **14.06.2006**

(51) Int Cl.:
***C08K 5/00*** *(2006.01)*

(86) Internationale Anmeldenummer:
**PCT/EP2006/063232**

(87) Internationale Veröffentlichungsnummer:
**WO 2006/134138 (21.12.2006 Gazette 2006/51)**

(54) **THERMOPLASTISCHES POLYURETHAN ENTHALTEND ISOCYANAT**

ISOCYANATE-CONTAINING THERMOPLASTIC POLYURETHANE

POLYURETHANNE THERMOPLASTIQUE CONTENANT DE L'ISOCYANATE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.06.2005 DE 102005028056**

(43) Veröffentlichungstag der Anmeldung:
**02.04.2008 Patentblatt 2008/14**

(73) Patentinhaber: **BASF SE**
**67056 Ludwigshafen am Rhein (DE)**

(72) Erfinder:
- **HENZE, Oliver Steffen**
  **49448 Lemförde (DE)**
- **STEINBERGER, Rolf**
  **49143 Schledehausen-Bissendorf (DE)**
- **KRECH, Rüdiger**
  **49356 Diepholz (DE)**
- **POHLMANN, Norbert**
  **49638 Nortrup (DE)**
- **BECKMANN, Christian**
  **49328 Melle (DE)**
- **DUWENHORST, Jörn**
  **49448 Lemförde (DE)**

(56) Entgegenhaltungen:
**EP-A- 0 630 926**
**DE-A1- 10 120 567**
**US-A- 5 863 466**
**US-A1- 2002 115 782**
**US-A1- 2003 166 749**
**US-A1- 2005 043 492**
**US-B1- 6 723 333**

- **PATENT ABSTRACTS OF JAPAN Bd. 017, Nr. 208 (M-1401), 23. April 1993 (1993-04-23) & JP 04 349052 A (TOYODA GOSEI CO LTD), 3. Dezember 1992 (1992-12-03)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 904 566 B1

## Beschreibung

Die Erfindung bezieht sich auf thermoplastisches Polyurethan (i) in Form eines granulats enthaltend zwischen 20 Gew.-% und 70 Gew.-%, bevorzugt zwischen 25 Gew.-% und 70 Gew.-%, besonders bevorzugt zwischen 30 Gew.-% und 60 Gew.-%, insbesondere zwischen 35 Gew.-% und 60 Gew.-%, insbesondere bevorzugt zwischen 40 Gew.-% und 60 Gew.-%, insbesondere besonders bevorzugt zwischen 45 Gew.-% und 55 Gew.-% Isocyanat gelöst in dem thermoplastischen Polyurethan, bezogen auf das Gesamtgewicht des thermoplastischen Polyurethans (i) enthaltend die Isocyanate, herstellbar durch ein Verfahren, bei dem man das thermoplastische Polyurethan bei Temperaturen zwischen 170 und 240 °C aufschmilzt und anschließend in diese Schmelze das Isocyanat mit Temperaturen zwischen 20 und 80 °C zumischt, so dass die resultierende Mischung eine Temperatur zwischen 120 und 160 °C aufweist, sowie auf Verfahren zur Herstellung dieser thermoplastischen Polyurethane (i) enthaltend Isocyanat, wobei man thermoplastisches Polyurethan bei Temperaturen zwischen 170 und 240 °C aufschmilzt und anschließend in diese Schmelze das Isocyanat, bevorzugt homogen, mit Temperaturen zwischen 20 und 80 °C zumischt, so dass die resultierende Mischung eine Temperatur zwischen 120 und 160 °C aufweist Außerdem betrifft die Erfindung Verfahren zur Herstellung von Polyurethanen, wobei man die Herstellung in Gegenwart der erfindungsgemäßen thermoplastischen Polyurethane (i) enthaltend die Isocyanate durchführt. Des weiteren bezieht sich die Erfindung auf Verfahren zur Umsetzung von thermoplastischen Polyurethanen mit Isocyanat, beispielsweise in einem Extruder, wobei man als Isocyanat die erfindungsgemäßen thermoplastischen Polyurethane (i) enthaltend Isocyanate einsetzt. Außerdem betrifft die Erfindung Verfahren zum Spritzgießen von thermoplastischem Polyurethan, wobei man thermoplastisches Polyurethan gemeinsam mit dem erfindungsgemäßen thermoplastischem Polyurethan (i) enthaltend Isocyanate spritzgießt.

Die Herstellung von thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergledichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von TPU. Thermoplastische Polyurethane sind Kunststoffe mit einem vielfältigen Anwendungsfeld. So finden sich TPU beispielsweise in der Automobilindustrie, z.B. in Instrumententafelhäuten, in Folien, in Kabelummantelungen, in der Freiheitindustrie, als Absatzflecke, als Funktions- und Designelement bei Sportschuhen, als Weichkomponente in Hart -Weichkombinationen und in vielfältigen weiteren Anwendungen.

Zur Verbesserung des Eigenschaftsprofils von TPU ist es aus der Literatur bekannt, Vernetzung in das TPU einzuführen, die dazu führen, dass die Festigkeiten erhöht, die Wärmestandfestigkeit verbessert, Zug- und Druckverformungsrest verringert, Beständigkeiten gegen Medien aller Art, Rückstellvermögen und Kriechverhalten verbessert werden.

Als Verfahren zur Vernetzung sind u.a. UV- oder Elektronenstrahlvernetzung, Vernetzung über Siloxangruppen und die Ausbildung von Vernetzungen durch Zugabe von Isocyanaten zum geschmolzenen TPU bekannt. Die Umsetzung eines TPU bevorzugt in geschmolzenem Zustand mit Isocyanatgruppen aufweisenden Verbindungen wird auch als Prepolymervernetzung bezeichnet und ist allgemein aus US 42 61 946, US 43 47 338, DE-A 41 15 508, DE-A 4 412 329, EP-A 922 719, GB 2347933, US 61 42 189, EP-A 1 158 011 bekannt. Trotz dieser allgemeinen Kenntnis über die Möglichkeiten der Prepolymervernetzung konnte sich dieses Verfahren bislang in der Praxis nicht durchsetzen. Gründe hierfür liegen unter anderem in der schwierigen apparativen Ausgestaltung. Das möglichst homogene Vermischen des üblicherweise als Granulat vorliegenden TPU mit den flüssigen oder zähflüssigen Isocyanatgruppen aufweisenden Verbindungen führt in der Praxis zu erheblichen Schwierigkeiten. Zum anderen stellt auch die Umsetzung des TPU mit den Isocyanatgruppen aufweisenden Verbindungen eine schwierige chemische Aufgabe dar, da das Vermischen des geschmolzenen TPU mit Diisocyanaten zu einem Molekulargewichtsabbau der thermoplastischen Polyurethane führen kann, während andererseits ein Vermischen mit Tri- und Polyisocyanaten zu einem Molekulargewichtsaufbau bis hin zu einer Vernetzung der thermoplastischen Polyurethane im Extruder bewirken kann. In beiden Fällen wird eine prozesssichere Verarbeitung des Polyurethans erschwert oder verhindert. Andererseits wird eine möglichst ausgeprägte Vernetzung im Endprodukt angestrebt.

Die Aufgabe der vorliegenden Erfindung bestand darin, die chemischen Komponenten derart zu optimieren, dass bei sehr guter Prozesssicherheit, z. B. Schmelzebeständigkeit, eine möglichst ausgeprägte Vernetzung erreicht werden kann. Zudem sollten die Komponenten insbesondere im Spritzguss einsetzbar sein und zu Artikeln führen, die einer Vernetzung zugänglich sind.

Diese Aufgaben konnten dadurch gelöst werden, dass man die Zudosierung des Isocyanates mittels der eingangs dargestellten Konzentrate, d. h. der erfindungsgemäßen TPU (i) enthaltend Isocyanate in hoher Konzentration, durchführt.

Die vorliegende Erfindung unterscheidet sich vom Stand der Technik insbesondere durch die wesentlich vereinfachte Handhabung der Isocyanate. Während in den meisten eingangs dargestellten Schriften flüssige Isocyanate

gehandhabt werden, können gemäß der vorliegenden Erfindung mit den thermoplastischen Polyurethanen (i) enthaltend die Isocyanate Feststoffe zudosiert werden. Die Feststoffdosierung ist gerade für den Spritzguss von besonderer Bedeutung. Außerdem konnte gerade im 2-Komponenten-Spritzguß die Haftung von thermoplastischem Polyurethan an andere thermoplastische Kunststoffe durch den Einsatz des Konzentrates (i), alleine oder zusammen mit weiteren thermoplastischem Polyurethan, deutlich verbessert werden, vermutlich durch die freien Isocyanatgruppen.

Die festen Konzentrate (i) bieten insbesondere den Vorteil, dass die Flüchtigkeit der Isocyanate deutlich gesenkt wird. Überraschenderweise wurde festgestellt, dass ein TPU enthaltend 50 Gew.-% eines Präpolymeren basierend auf MDI mit einem NCO Gehalt von 23 % und einer Viskosität von 650 mPas bestimmt nach DIN 53018 zum einen gut rieselfähig war, zum anderen kein flüchtiges MDI nachgewiesen werden konnte. Zudem sind die Isocyanate in den erfindungsgemäßen TPU (i) stabil, d.h. sie reagieren kaum oder gar nicht ab und sind damit widererwarten ausreichend lagerstabil.

Die erfindungsgemäßen thermoplastischen Polyurethane (i) enthaltend die Isocanate können somit wie Konzentrate eingesetzt und verarbeitet werden. Während im Stand der Technik die Zudosierung des Isocyanates zum thermoplastischen Polyurethan direkt vor der Verarbeitung zum Endprodukt und Vernetzung erfolgt, kann erfindungsgemäß ein stabiles Konzentrat (i) hergestellt werden, dass erst zu einem deutlich späteren Zeitpunkt zusammen mit weiterem thermoplastischen Polyurethan zum Endprodukt verarbeitet werden kann. In der vorliegenden Schrift wird deshalb unterschieden zwischen den erfindungsgemäßen Konzentraten, d. h. dem thermoplastischen Polyurethan (i) enthaltend das Isocyanat, und "normalen" thermoplastischen Polyurethanen, die keine Isocyanate in den erfindungsgemäßen Mengen enthalten. Dabei werden in der vorliegenden Schrift die Konzentrate mit (i) gekennzeichnet.

In den erfindungsgemäßen thermoplastischen Polyurethanen (i) liegen die Isocyanate gelöst in dem TPU vor, insbesondere in der Weichphase des thermoplastischen Polyurethans. Eine Reaktion des Isocyanates mit dem TPU und damit Abbau oder Vernetzung des TPU kann insbesondere dadurch vermieden werden, dass die Temperatur bei der Einarbeitung ausreichend niedrig gewählt wird. Üblicherweise ändert sich das Molekulargewicht des TPU bei der erfindungsgemäßen Einarbeitung der Isocyanate nicht oder nur sehr geringfügig. Andererseits ist es bevorzugt, dass das thermoplastische Polyurethan bei der Einarbeitung des Isocyanates geschmolzen vorliegt, um eine möglichst hohe Konzentration von Isocyanat in dem TPU möglichst schnell erreichen zu können. Bevorzugt wird das erfindungsgemäße thermoplastische Polyurethan (i) enthaltend Isocyanat bis zur Verarbeitung bei einer Temperatur kleiner als 40°C gelagert.

Das erfindungsgemäße Konzentrat, d.h. das TPU (i) enthaltend die Isocyanate weist zudem den Vorteil auf, dass bei einer Zugabe zum zu vernetzenden TPU kein Fremdpolymer zugeführt wird. Man kann somit dem zu vernetzenden TPU gleiches TPU (i) enthaltend die Isocyanate zufügen. Mischungen können somit ebenso vermieden werden wie umfangreiche Anpassungen durch Rezepturänderungen, d.h. durch Zugabe eines Fremdpolymers.

Die erfindungsgemäßen TPU, d. h. die thermoplastischen Polyurethane (i) enthaltend die Isocyanate, weisen besonders bevorzugt einen NCO-Gehalt größer als 5 %, bevorzugt größer als 8 %, besonders bevorzugt zwischen 10 % und 40 % auf.

Dabei wird der NCO-Gehalt als Summe aus Isocyanat und Allophanat bestimmt. Dazu wird die Probe in Dimethylformamid, das Amin enthält, gelöst und 4 Std. bei 80°C gehalten. Der unreagierte Aminüberschuß wird mit Säure zurücktitriert.

Im einzelnen geht man folgendermaßen vor:

> Eine auf den Isocyanatgehalt zu testende Probe wird eingewogen. Die Einwaage wird dem erwarteten Gehalt an Isocyanatgruppen angepaßt und auf (±0,001g) genau gewogen. Die Analyse wird als Doppelbestimmung ausgeführt.

Zu jeder Analyse werden Blindproben ohne Einwaage, sonst jedoch völlig gleich, als Dreifachbestimmung durchgeführt.

20,00 ml einer Di-n-hexylaminlösung (8,8(±0,01)g Di-n-hexylamin werden mit DMF zu 2000 ml Lösung aufgefüllt) werden mit dem Dosimat 665 (Dosimat Methrom 665 mit 20 ml Bürettenaufsatz) in eine Weithalsflasche (Schott Laborflaschen 250ml mit Schraubverschluß aus PP (blau) DIN Gewinde GL45) dosiert. Dann werden noch 100 ml DMF mit einer Dispensette und anschließend die abgewogene Probe hinzugegeben. Die Weithalsflasche wird fest verschlossen und anschließend die enthaltene feste Probe mittels Magnetrührstäbchen (Magnetrührstäbchen, dreieckig, l = 55 mm) in der fest verschlossenen Flasche im Ölbad bei 80 ° auf einem Magnetrührer gelöst.

In allen drei Fällen werden die Proben danach auf Raumtemperatur abgekühlt und können dann titriert werden.

Zu den abgekühlten Lösungen werden 3 Tropfen Indikatorlösung (Bromphenolblau 1 %ig in DMF) zugegeben. Dann wird die Lösung mit der 0,1 n Salzsäure (Hergestellt durch Auffüllen des Inhaltes einer Ampulle Titrisol 0,1 mol/l Salzsäure mit Butanol-1 auf 1 l:) in Butanol-1 mit dem Dosimat 665 (Dosimat Methrom 665 mit 5 ml Bürettenaufsatz) zurücktitriert. Der Endpunkt ist erreicht, wenn die Farbe von hellgrün auf gelbgrün-gelb umschlägt. Der Säureverbrauch geht als "A" in die Berechnung ein.

Der Mittelwert der verbrauchten Säuremengen der drei Blindbestimmungen geht als "B" in die Rechnung ein.

Beide Analysenwerte werden getrennt berechnet.

Berechnung des Gesamtisocyanatgehaltes in % NCO (Summe aus Isocyanatgruppen und Allophanatgruppen, berechnet als NCO):

E = Einwaage der Probe in g ($\pm$0,001g)
B = Säureverbrauch im Blindversuch (Mittelwert) in ml
A = Säureverbrauch bei der Analyse in ml

$$\% \text{ NCO} = (B-A) \times 0{,}42 / E$$

Der Mittelwert der Doppelbestimmung ist der NCO Gehalt der TPU Probe (i).

Als Isocyanate in dem erfindungsgemäßen thermoplastischen Polyurethan (i) können allgemein bekannte Isocyanate vorliegen, beispielsweise aliphatische, cycloaliphatische und/oder aromatische Isocyanate im allgemeinen mit 2 Isocyanatgruppen. In Frage kommen auch Isocyanate höherer Funktionalität, z. B. Polymer-MDI oder modifizierte Isocyanate, beispielsweise Biuretgruppen enthaltene Isocyanate mit 2 bis 10 Isocyanatgruppen, Isocyanurate, die bevorzugt zwei bis acht, besonders bevorzugt drei Isocyanatgruppen aufweisen, und/oder Prepolymere mit 2 bis 10 Isocyanatgruppen, d.h. Isocyanate, die erhältlich sind nach Umsetzung von Isocyanaten mit gegenüber Isocyanaten reaktiven Verbindungen, im allgemeinen Alkoholen.

In Betracht kommen somit beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4-und/oder-2,6-cyclohexan-diisocyanat und/oder 4,4'-, 2,4'-und 2,2'-Dicyclohexylmethan-diisocyanat, 2,2'-, 2,4'- und/oder 4,4'-Diphenyl-methandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat und/oder Phenylendiisocyanat.

Bevorzugt eingesetzt werden MDI, ein Carbodiimid-modifiziertes 2,2'-, 2,4'- und/oder 4,4'-Diphenylmethandiisocyanat (MDI) und/oder ein Prepolymer auf der Basis von 2,2'-, 2,4'- und/oder 4,4'-Diphenylmethandiisocyanat (MDI), Triisocyanate oder Polyisocyanate, besonders Biurete oder Isocyanurate der genannten Isocyanate besonders ein Isocyanurat mit einem NCO-Gehalt zwischen 20 % und 25 % und einer Viskosität bei 23°C zwischen 2500 mPas und 4000 mPas und/oder Mischungen von Diisocyanaten und Triisocyanaten, bevorzugt Mischungen (ii) enthaltend (iia) Verbindungen mit mindestens drei, bevorzugt drei Isocyanatgruppen auf der Basis von aliphatischen Iso-cyanaten, bevorzugt Hexamethylendiisocyanat (HDI) und/oder 1-Isocyanato-3,3,5-trimethyl-5-isocyanatomethyl-cyclohexan (Isophoron-diisocyanat, IPDI), besonders bevorzugt Hexamethylendiisocyanat (HDI), und (iib) Verbindungen mit zwei Isocyanatgruppen auf der Basis von aromatischen Isocyanaten, bevorzugt 2,2'-, 2,4'-und/oder 4,4'-Diphenylmethandiisocyanat (MDI), besonders bevorzugt 4,4'-Diphenylmethandiisocyanat einsetzt. Als (iia) setzt man bevorzugt ein Isocyanurat mit drei Isocyanatgruppen ein, bevorzugt ein Isocyanurat auf der Basis von HDI, d. h. ein trimerisiertes HDI, bei dem drei HDI eine Isocyanuratstruktur ausbilden und drei freie Isocyanatgruppen vorliegen. Besonders bevorzugt setzt man als (iia) ein Isocyanurat mit einem NCO-Gehalt zwischen 20 % und 25 %, bevorzugt zwischen 21,5 % und 22,5 % und einer Viskosität bei 23 °C zwischen 2500 mPas und 4000 mPas ein. Als (iib) setzt man bevorzugt 2,2'-, 2,4'- und/oder 4,4'-Diphenylmethandiisocyanat (MDI), ein Carbodiimid-modifiziertes MDI und/oder ein Prepolymer auf der Basis von MDI ein. Besonders bevorzugt ist als (iib) ein Prepolymer auf der Basis von 2,2'-, 2,4'- und/oder 4,4'-Diphenylmethandiisocyanat (MDI), Alkandiol, bevorzugt Dipropylenglykol, mit einem Molekulargewicht zwischen 60 g/mol und 400 g/mol und Polyetherdiol, bevorzugt Polypropylenglykolether, mit einem Molekulargewicht zwischen 500 g/mol und 4000 g/mol. Besonders bevorzugt ist ein Prepolymer als (iib) mit einer Viskosität bei 25°C zwischen 500 mPas und 800 mPas, bevorzugt zwischen 550 mPas und 770 mPas und einem NCO-Gehalt zwischen 20 % und 25 %, bevorzugt zwischen 22,4 % und 23,4 %. Bevorzugt setzt man (iia) und (iib) in einem Gewichtsverhältnis von (iia) : (iib) zwischen 1 : 1 und 1 : 10, bevorzugt zwischen 1 : 3 und 1 : 4 einsetzt.

Besonders bevorzugt sind als Isocyanat 2,2'-, 2,4'- und/oder 4,4'-Diphenylmethandiisocyanat (MDI), ein Carbodiimid-modifiziertes 2,2'-, 2,4'- und/oder 4,4'- Diphenylmethandiisocyanat (MDI), ein Prepolymer auf der Basis von 2,2'-, 2,4'- und/oder 4,4'- Diphenylmethandiisocyanat (MDI), bevorzugt ein Präpolymer mit einem NCO Gehalt zwischen 20 und 25 % und einer Viskosität bei 25°C zwischen 500 und 1000 mPas bestimmt nach DIN 53018, Biuret- und/oder Isocyanuratgruppen aufweisende Isocyanate, besonders bevorzugt Isocyanurat mit einem NCO-Gehalt zwischen 20 % und 25 % und einer Viskosität bei 23°C zwischen 2500 mPas und 4000 mPas bestimmt nach DIN EN ISO 3219, insbesondere auf der Basis von Hexamethylendiisocyanat (HDI).

Insbesondere bevorzugt sind Carbodiimid-modifiziertes 4,4'-Diphenylmethandiisocyanat (MDI), besonders bevorzugt mit einem Isocyanatgehalt zwischen 25 Gew.-% und 33 Gew.-%, insbesondere von 29,5 Gewichtsprozent, beispielsweise Lupranat® MM 103 (BASF Aktiengesellschaft), Prepolymer auf Basis Ethylenoxid/Propylenoxid, bevorzugt mit einem Molekulargewicht zwischen 400 und 600 g/mol, insbesondere $M_w$ = 450 g/mol, bevorzugt mit einem Isocyanatgehalt von zwischen 20 und 28 Gew.-%, insbesondere 23 Gew.-%, beispielsweise Lupranat® MP 102 (BASF Aktiengesellschaft), und/oder ein trimerisiertes Hexamethylendiisocyanat bevorzugt mit einem Isocyanatgehalt zwischen 20 und 28 Gew.-%, insbesondere 23 Gew.-%, beispielsweise Basonat® HI 100 (BASF Aktiengesellschaft).

Zur Herstellung des thermoplastischen Polyurethans (i) enthaltend die Isocyanate können allgemein bekannte thermoplastische Polyurethane eingesetzt werden, z. B. solche auf der Basis aliphatischer oder aromatischer Ausgangssubstanzen. Die thermoplastischen Polyurethane, in die die Isocyanaten eingebracht werden und die anschließend die erfindungsgemäßen thermoplastischen Polyurethane (i) enthaltend die Isocyanate darstellen, können eine allgemein bekannte Härte aufweisen. Bevorzugt sind aber als Ausgangsmaterial zur Herstellung der Konzentrate (i) insbesondere thermoplastische Polyurethane mit einer Shore-Härte zwischen 80 A und 60 D, besonders bevorzugt zwischen 85 A und 95 A, insbesondere zwischen 90 A und 95 A. Thermoplastische Polyurethane in diesen bevorzugten Härtebereichen zur Herstellung der erfindungsgemäßen thermoplastischen Polyurethane (i) enthaltend die Isocyanate sind hinsichtlich zweier Aspekte optimiert: Zum einen wird das Isocyanat überwiegend in der Weichphase gelöst, so dass das TPU möglichst weich sein sollte, um viel Isocyanat in dem TPU zu lösen. Zum anderen sollte das TPU nach der Einarbeitung eine ausreichende Rieselfähigkeit aufweisen. Dies wird dadurch erzielt, dass das TPU ausreichend hart ist, damit die Hartphase nach der Einarbeitung des Isocyanates hinreichend schnell kristallisieren kann.

Das thermoplastische Polyurethan (i) enthaltend die Isocyanate liegt in Form eines Granulates vor, bevorzugt mit einem bevorzugt mittleren Teilchendurchmesser zwischen 0,05 mm und 10 mm, bevorzugt zwischen 1 mm und 5 mm.

Die Herstellung des erfindungsgemäßen thermoplastischen Polyurethans (i) enthaltend Isocyanat erfolgt derart, dass man thermoplastisches Polyurethan schmilzt und anschließend in die thermoplastische Polyurethanschmelze, das Isocyanat bevorzugt homogen einarbeitet. Dabei weist die resultierende thermoplastische Polyurethanschmelze (i) eine Temperatur zwischen 120°C und 960°C auf. Das thermoplastische Polyurethan wird bei einer Tempe-ratur zwischen 170 und 240°C geschmolzen und anschließend in diese Schmelze das Isocyanat mit Temperaturen zwischen 20 und 80°C zugemischt, so dass die resultierende Mischung eine Temperatur zwischen 120°C und 160°C aufweist. Eine derartige Verarbeitung bei einer Zieltempe-ratur kleiner 160°C bietet den Vorteil, dass bei dieser Temperatur ein Abbau des thermoplastischen Polyurethans durch die Zugabe von Diisocyanaten oder eine Vernetzung des thermoplastischen Polyurethans durch die Zuführung von Tri- oder Polyisocyanate vermieden werden kann.

Bevorzugt kann man das Isocyanat mittels eines Extruders in das thermoplastische Polyurethan einarbelten, bevorzugt mittels eines Zweiwellenextruders.

Bevorzugt kann man das aus dem Extruder erhältliche Produkt, d.h. das thermoplastische Polyurethan (i) enthaltend Isocyanat, direkt nach dem Austreten aus der Düse des Extruders in einem Wasserbad abkühlen und den erhaltenen Strang anschließend beispielsweise durch allgemein bekannte Verfahren granulieren.

Bevorzugt kann man alternativ das aus dem Extruder erhältliche Produkt, d. h. die TPU Schmelze (i) enthaltend das Isocyanat, durch eine Mehrlochdüse direkt vom Extruder in ein Wasserbad auspressen und anschließend mit einem rotierenden Messer zerteilen (Unterwassergranulierung). Dabei wird die TPU-Schmelze (i) bevorzugt im Wasser bevorzugt durch eine Mehrlochdüse ausgepresst und mit einem rotierenden Messer bevorzugt im Wasser zerteilt.

Wie eingangs dargestellt ist, betrifft die Erfindung auch Verfahren zur Herstellung von Polyurethanen, beispielsweise vernetzten oder thermoplastischen, kompakten oder zelligen, harten, halbharten oder weichen Polyurethanen, die gegebenenfalls Harnstoff und/oder Isocyanuratgruppen enthalten können, wobei man die Herstellung in Gegenwart der erfindungsgemäßen thermoplastischen Polyurethane (i) durchführt. Dabei werden die thermoplastischen Polyurethane (i) enthaltend die Isocyanate als Isocyanatkonzentrat, quasi als alleinige oder zusätzliche Isocyanatkomponente ggf. zusätzlich zu üblichen weiteren Isocyanaten eingesetzt. Die Herstellung von Polyurethanen, beispielsweise vernetzten oder thermoplastischen, kompakten oder zelligen, harten, halbharten oder weichen Polyurethanen, die gegebenenfalls Harnstoff und/oder Isocyanuratgruppen enthalten können, ist allgemein bekannt und vielfältig beschrieben. Die Verfahren zur Herstellung von Polyurethanen erfolgen üblicherweise durch Umsetzung von (a) Isocyanaten mit (b) gegenüber Isocyanaten reaktiven Verbindungen, bevorzugt durch Umsetzung von (a) Isocyanaten mit (b) Verbindungen mit gegenüber Isocyanatgruppen reaktiven Wasserstoffatomen bevorzugt in Gegenwart von Katalysatoren (d), (f) physikalischen und/oder chemischen Treibmitteln und gegebenenfalls (e) Zusatzstoffen und sind allgemein bekannt. Das erfindungsgemäß Verfahren unterscheidet sich von diesen bekannten Verfahren wie geschildert dadurch, dass als Isocyanat (a) die erfindungsgemäßen thermoplastischen Polyurethane (i) enthaltend die Isocyanate eingesetzt werden.

Wie eingangs beschrieben wurde, betrifft die Erfindung insbesondere auch Verfahren zur Umsetzung von thermoplastischen Polyurethanen mit Isocyanat, wobei man als Isocyanat das erfindungsgemäße thermoplastische Polyurethan (i) enthaltend Isocyanate einsetzt. Bei diesem Verfahren werden somit zwei verschiedene thermoplastische Polyurethane eingesetzt: zum einen das thermoplastische Polyurethan, das üblicherweise in granulierter oder bereits geschmolzener Form vorliegt und das durch die Zugabe von Isocyanaten vernetzt werden soll und zum anderen das erfindungsgemäß thermoplastische Polyurethan (i) enthaltend die Isocyanate, d. h. das Isocyanatkonzentrat, das dem

zu vernetzenden TPU zudosiert wird.

Durch den Überschuss an Isocyanatgruppen durch die Zugabe des thermoplastischen Polyurethans (i) enthaltend die Isocyanate zu dem thermoplastischen Polyurethan wird erreicht, dass diese Isocyanatgruppen während und/oder nach dem Mischen des TPU mit dem thermoplastischen Polyurethan (i) in kaltem oder bevorzugt warmen besonders bevorzugt geschmolzenem Zustand der Komponenten Vernetzungen in Form von beispielsweise Urethan-, Allophanat-, Uretdion-, und/oder Isocyanuratstrukturen sowie eventuell Harnstoff- und Biuretbindungen ausbilden, die zu den verbesserten Eigenschaften der Polyisocyanat-Polyadditionsprodukte führen. Die Bildung der Vernetzungen kann gegebenenfalls durch Zugabe von Katalysatoren, die zu diesem Zweck allgemein bekannt sind, beispielsweise Alkaliacetate- und/oder -formiate, gefördert werden. Außerdem erfolgt eine Vernetzung über freie gegenüber Isocyanaten reaktive Gruppen, z. B. Hydroxylgruppen oder primäre oder sekundäre Aminogruppen, insbesondere Hydroxylgruppen, des linearen TPU-Polymers. Diese reaktiven Gruppen können bereits in dem TPU-Granulat vorliegen, sie entstehen aber auch im Extruder in der TPU-Schmelze z.B. durch thermische Spaltung des Polymerstranges unter Verarbeitungsbedingungen oder auch beim Lagern oder Tempern des Isocyanat-reichen Materials.

Bevorzugt wird man dabei pro 100 Gew.-Teile thermoplastisches Polyurethan zwischen 1 und 70 Gew.-Teile, bevorzugt zwischen 5 und 60 Gew.-Teile, besonders bevorzugt zwischen 10 und 50 Gew.-Teile thermoplastisches Polyurethan (i) enthaltend Isocyanate einsetzen. Bereits die Zudosierung kleiner Anteile des Konzentrates kann sinnvoll sein, um Schwankungen in der Zusammensetzung von TPU-Chargen durch die Zugabe kleiner Mengen an Isocyanat auszugleichen.

Bevorzugt wird man das Konzentrat (i) derart zu dem thermoplastischen Polyurethan zudosieren, dass man das bevorzugt granulierte thermoplastische Polyurethan, d. h. das thermoplastische Polyurethan, dem durch das Konzentrat (i) Isocyanatgruppen zugeführt werden sollen, gemeinsam mit dem granulierten thermoplastischen Polyurethan (i), d. h. dem Konzentrat enthaltend das Isocyanat, in einen Extruder einführt und schmilzt und bevorzugt in geschmolzenem Zustand mischt.

Alternativ ist es auch möglich, das thermoplastische Polyurethan in den Extruder. einzuführen, zu schmelzen und anschließend Konzentrat (i) als Granulat; der Schmelze zuzuführen.

Dabei kann man das granulierte thermoplastische Polyurethan zusammen mit dem thermoplastischen Polyurethan (i) bevorzugt durch eine Einzugshilfe in den Extruder einführen. Der Extruder weist bevorzugt eine Barriereschnecke auf.

Durch den bevorzugten Einsatz einer Einzugshilfe am Extruder oder an der Spritzgussapparatur, durch die das TPU und das thermoplastischen Polyurethan (i) enthaltend die Isocyanate dem Extruder zugeführt werden gelingt es, dass feste TPU-Granulat zusammen oder getrennt, bevorzugt zusammen mit den thermoplastischen Polyurethan (i) enthaltend die Isocyanate in den Extruder oder die Spritzgussapparatur schnell und sicher einzuführen. Besonders bevorzugt wird man das thermoplastische Polyurethan (i) zusammen mit thermoplastischen Polyurethanen durch die Einzugshilfe dem Extruder oder der Spritzgussapparatur einführen, d. h. man verwendet dieselbe Einzughilfe für das TPU und das thermoplastische Polyurethan (i).

Bei dem Extruder kann es sich um einem allgemein bekannten Extruder handeln, wie er beispielsweise zur Extrusion von TPU allgemein bekannt ist, z. B. einen Ein- oder bevorzugt Zweiwellenextruder, besonders bevorzugt Einwellenextruder mit Einzughilfe, insbesondere mit genuteter Einzughilfe. Diese besonders bevorzugten Ausgestaltungen führen zu einer besonders effektiven und wirtschaftlichen Durchmischung und Umsetzung von TPU mit den in dem thermoplastischen Polyurethan (i) enthaltenen Isocyanaten.

Einzugshilfen für Extruder sind dem Fachmann auf dem Gebiet der Extrusion allgemein bekannt und vielfach beschrieben. Bevorzugt handelt es sich bei der Einzugshilfe um eine genutete Einzugszone. Genutete Einzugshilfen, Nutbuchsenextruder oder Extruder mit genuteter Einzugszone genannt, sind dem Fachmann auf dem Gebiet der Extrudertechnik allgemein bekannt und vielfältig beschrieben, so z. B. in "Der Extruder im Extrusionsprozess - Grundlage für Qualität und Wirtschaftlichkeit", VDI-Verlag GmbH, Düsseldorf, 1989, ISBN 3-18-234141-3, Seiten 13 bis 27. Charakteristisch für eine genutete Einzugszone ist das Vorhandensein üblicherweise im wesentlichen parallel zur Längserstreckung der Schnecke in der Einzugszone des Extruders vorhandene Längsnuten in der Zylinderwand, die üblicherweise in Förderrichtung gesehen zum Ende der Einzugzone konisch auslaufen.

Bevorzugt weisen die Nuten eine Tiefe auf, die zwischen 10 % und 90 % des mittleren Teilchendurchmessers des TPUs beträgt, d. h. die Tiefe der Nuten ist deutlich kleiner als der mittlere Teilchendurchmesser des granulierten TPU. Besonders bevorzugt weisen die Nuten eine Tiefe zwischen 1 mm und 8 mm, bevorzugt zwischen 2 mm und 5 mm auf. Die genutete Einzugszone besitzt bevorzugt eine Länge zwischen dem 2fachen und dem 4fachen des Schneckendurchmessers. Bevorzugt weist die genutete Einzugszone zwischen 4 und 32, besonders bevorzugt zwischen 4 und 16 Nuten auf, die bevorzugt parallel oder spiralförmig, bevorzugt parallel zur Längsachse des Extruders verlaufen.

Als Schnecken können allgemein bekannte Schnecken eingesetzt werden, z.B. 3- oder 5-Zonen Schnecken. Besondere Vorteile ergeben sich im vorliegenden Verfahren, wenn man einen Extruder einsetzt, der eine Barriereschnecke aufweist. Barriereschnecken sind in der Extrusion allgemein bekannt, z. B. aus "Der Extruder im Extrusionsprozeß - Grundlage für Qualität und Wirtschaftlichkeit", VDI-Verlag GmbH, Düsseldorf, 1989, ISBN 3-18-234141-3, Seiten 107

bis 125, Seiten 139 bis 143.

Die Temperatur der Schmelze in dem Extruder oder in der Spritzgussapparatur, bevorzugt dem Extruder beträgt üblicherweise zwischen 150°C bis 240°C, bevorzugt zwischen 180°C bis 230°C.

Die Verweilzeit des TPU in dem Extruder beträgt bevorzugt zwischen 120 s und 600 s.

Gegenstand der vorliegenden Erfindung sind außerdem Verfahren zum Spritzgießen von thermoplastischem Polyurethan, wobei man thermoplastisches Polyurethan, dem durch das Konzentrat (i) Isocyanat zugeführt und das üblicherweise durch diese Isocyanatgruppen nach dem Spritzgießen vernetzt werden soll, gemeinsam mit dem erfindungsgemäßen thermoplastischen Polyurethan (i) enthaltend Isocyanate spritzgießt. Das erfindungsgemäße Konzentrat, d.h. das thermoplastische Polyurethan (i) enthaltend das Isocyanat, weist gerade für den Spritzguss den besonderen Vorteil der Feststoffdosierung auf. Durch die festen Konzentrate (i) kann auf flüssige Isocyanate verzichtet werden. Dennoch kann durch das Konzentrat (i) ein hoher Gehalt an freien Isocyanatgruppen in den spritzgegossenen Formkörper eingebracht werden. Dieser Gehalt an freien Isocyanatgruppen kann anschließend wie gewünscht für eine Vernetzung genutzt werden.

Besonders bevorzugt sind zudem Verfahren zum Spritzgießen von thermoplastischem Polyurethan, bei denen man im Zwei-Komponenten-Spritzguß thermoplastisches Polyurethan gemeinsam mit thermoplastischem Polyurethan (i) enthaltend Isocyanate als eine Komponente spritzgießt und bevorzugt an einen weiteren thermoplastischen Kunststoff bevorzugt haftend anspritzt.

Das Spritzgießen von thermoplastischen Kunststoffen ist allgemein bekannt und insbesondere auch für thermoplastisches Polyurethan vielfältig beschrieben. So ist das Prinzip des Zweikomponenten (2-K-) Spritzguss in der Abbildung 2 in Simon Amesöder et al., Kunststoffe 9/2003, Seiten 124 bis 129 dargestellt.

Die Temperatur beim Spritzgießen von thermoplastischem Polyurethan beträgt dabei bevorzugt zwischen 140°C und 250°C, besonders bevorzugt zwischen 160°C und 230°C. TPU werden bevorzugt möglichst schonend verarbeitet. Die Temperaturen können je nach Härte angepasst werden. Die Umfangsgeschwindigkeit beim Plastifizieren liegt bevorzugt kleiner oder gleich 0,2 m/s, der Staudruck beträgt bevorzugt zwischen 30 bis 200 bar. Die Einspritzgeschwindigkeit ist bevorzugt möglichst gering, um die Scherbeanspruchung niedrig zu halten. Die Kühlzeit ist bevorzugt ausreichend lang zu wählen, wobei der Nachdruck bevorzugt 30 zwischen 80 % des Einspritzdruckes beträgt. Die Formen werden bevorzugt auf zwischen 30 °C und 70°C temperiert. Der Anguß wird bevorzugt an der stärksten Stelle des Bauteils gewählt. Bei flächigen Überspritzungen kann eine Anspritzpunkte-Kaskade eingesetzt werden.

Als weitere thermoplastische Kunststoffe, bevorzugt harte thermoplastische Kunststoffe, können zusammen mit dem TPU allgemein bekannte weitere thermoplastische Kunststoffe eingesetzt werden, beispielsweise ..Polyamide, Polyester, Polycarbonate, ABS. Bevorzugt wird erst der Formkörper aus einem harten thermoplastischen Kunststoff mittels Spritzguss hergestellt, an den anschließend das thermoplastische Polyurethan enthaltend das Konzentrat (i) angespritzt wird.

Die erfindungsgemäß erhältlichen Spritzgussartikel, insbesondere die aus dem Zwei-Komponenten-Spritzguss erhältlichen Artikel bevorzugt enthaltend thermoplastisches Polyurethan haftend verbunden mit einem weiteren thermoplastischen Kunststoff, weisen den besonderen Vorteil auf, dass sie durch die freien Isocyanatgruppen vernetzt werden können. Zudem haftet das thermoplastische Polyurethan durch die durch das Konzentrat (i) zugeführten Isocyanate besonders gut an weiteren allgemein bekannten thermoplastischen Kunststoffen, die zusammen mit dem thermoplastischen Polyurethan im 2-Komponenten-Spritzguß Verwendung finden.

Das erfindungsgemäße Verfahrensprodukt, d. h. das TPU enthaltend das thermoplastische Polyurethan (i) mit dem Isocyanat, kann nach allgemein bekannten Verfahren z. B. mittels Spritzguss oder Extrusion zu Formkörpern aller Art, Rollen, Schuhsohlen, Verkleidungen in Automobilen, Schläuchen, Kabelsteckern, Faltenbälgen, Schleppkabeln, Wischerblättern, Kabelummantelungen, Dichtungen, Riemen oder Dämpfungselementen, Folien oder Fasern verarbeitet werden. Die Verarbeitungstemperatur bei der Herstellung der Folien, Formkörpern oder Fasern beträgt bevorzugt 150°C bis 230°C, besonders bevorzugt 180°C bis 220°C. Eine Verarbeitung der Mischung zu den gewünschten Folien, Formkörpern und/oder Fasern erfolgt bevorzugt direkt nach oder während dem Vermischen des TPU mit dem thermoplastischen Polyurethan (i), da eine thermoplastische Verarbeitung der Polyisocyanat-Polyadditionsprodukte zu Folien, Formkörpern oder Fasern bevorzugt vor und/oder während der Ausbildung der Vernetzungen durchgeführt wird.

Durch eine anschließende Temperung/Lagerung der Verfahrensprodukte aus der Extrusion, dem Spritzguss oder der Schmelzverspinnung, beispielsweise den Formkörpern, Folien oder Fasern, bei einer Temperatur von beispielsweise 20°C bis 100°C für eine Dauer von üblicherweise mindestens 2 Stunden, bevorzugt 12 bis 48 Stunden können Allophanat- Uretdion- und/oder Isocyanuratvernetzungen evtl. durch Hydrolyse auch Harnstoffbindungen und Biurete durch die im Überschuss vorhandenen Isocyanatgruppen in den Polyisocyanat-Polyadditionsprodukten ausgebildet werden. Diese Vernetzungen führen zu den sehr vorteilhaften Eigenschaften der Produkte in Bezug auf die Temperaturstabilität und das Hystereseverhalten nach Belastung.

Besonders bevorzugt sind ferner Verfahren zur Herstellung von bevorzugt transparenten bevorzugt bedruckten Folien, wobei man ein thermoplastisches Polyurethan zusammen mit dem thermoplastischen Polyurethan (i) enthaltend Isocyanate extrudiert. Die Herstellung von Folien auf der Basis von TPU ist allgemein bekannt und vielfältig beschrieben.

Besonders bevorzugt sind Skier, die diese erfindungsgemäßen Folien aufweisen, insbesondere als Träger für das Ski-Dekor. Diese bevorzugt transparenten Folien werden auf der Rückseite bedruckt und anschließend mit dem Skiträger verklebt. Der Vorteil der TPU Folie ist dabei die besonders gute Abriebsbeständigkeit, Kälteflexibilität und hohe Transparenz. Ein so hergestellter Ski muss nicht mehr nachbehandelt werden.

Der besondere Vorteil der erfindungsgemäßen Folien erweist sich insbesondere bei bedruckten Folien. Dabei können verschiedene Drucktechniken zum Einsatz kommen: Thermosublimationsdruck, Siebdruck und Digitaldruck, wobei Thermosublimationsdruck bisher für TPU Folien nicht zugänglich war. Die Sublimationsfarbe verläuft nach dem Druck weiter in der Matrix und der Druck wird sehr schnell unscharf. Durch die Zugabe des TPU- Konzentrates (i) enthaltend Isocyanat zum TPU und somit die Einarbeitung von Isocyanatgruppen in die TPU- Folie kann die Wanderung der Druckfarbe in der Folie und somit ein unscharfes Druckbild verhindert werden. Dieser Vorteil, d.h. die wirksame Verhinderung die Wanderung der Farbe, kommt insbesondere beim Einsatz von aminischen Farben zum Tragen.

Als mögliche Bindematerialen für Farbe (donor layer) sind beispielsweise bekannt: Stärke, Cellulose, Agar, poröse Materialien, hydrolysiertes PVC-PVA oder PVA (EP0531579B1 bzw. US6063842). Als Farben können z.B. Anthrachinonfarben, Monoazo- und Azomethinfarbstoffe (bevorzugt mit Amino, Alkoxy, Oxalyl, Halogen und Cyanogruppen), Leukobasen wie z. B. Diphenylamine, die Aminochinone oxidiert werden (Leukobase = allgem. Redox System) zum Einsatz kommen. Mögliche Bindemittel auf Papier/Trägerfolie sind beispielsweise ZnO, $CaCO_3$, Polyvinylalkohol, Cellulose, Metallsalze, Metallsulfide, $TiO_2$ oder $SiO_2$ wobei dies auch als Weißpigment zur Verbesserung des Kontrastes bzw. auch als Füllstoff dient, um das Material opak zu machen.

Gegenstand der vorliegenden Erfindung sind somit auch Skier, deren sichtbare Oberfläche bevorzugt zumindest teilweise eine transparente, bedruckte, bevorzugt mit aminischen Farben bevorzugt mittels Thermosublimationsdruck bedruckte Folie auf der Basis von thermoplastischem Polyurethan enthaltend Isocyanat, bevorzugt thermopfastisches Polyurethan enthaltend thermoplastisches Polyurethan (i) enthaltend Isocyanat aufweisen.

Als TPU sowohl zur Herstellung der erfindungsgemäßen TPU (i) als auch zur Vemetzung, d. h. zur Mischung mit den erfindungsgemäßen thermoplastischen Polyurethanen (i) enthaltend Isocyanate, können allgemein bekannte TPU eingesetzt werden. Die TPU können in dem erfindungsgemäßen Verfahren in üblicher Form, beispielsweise als Granulat oder Pellets, bevorzugt Granulat, eingesetzt werden. TPU sind allgemein bekannt und vielfältig beschrieben.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfsstoffen herstellt werden.

Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b), (c) sowie gegebenenfalls (d) und/oder (e) sollen im Folgenden beispielhaft beschrieben werden:

a) Als organische Isocyanate (a) können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, Pentamethyfen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2.4-und/oder 2,6-Toluylendiisocyanat (TDI), Hexamethylendiisocyanat und/oder IP-DI, insbesondere 4,4'- MDI und/oder Hexamethylendiisocyanat.

b) Als gegenüber Isocyanaten reaktive Verbindungen (b) können allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000, insbesondere 800 bis 4000, und bevorzugt einer mittleren Funktionalität von 1,8 bis 2,3, bevorzugt 1,9 bis 2,2, insbesondere 2.

c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)-acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.

e) Neben Katalysatoren (d) können den Aufbaukomponenten (a) bis (c) auch übliche Hilfsmittel (e) hinzugefügt werden. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet. Um die erfindungsgemäßen TPU gegen Alterung zu stabilisieren, werden dem TPU bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S. 98 - S. 136. Ist das erfindungsgemäße TPU während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S. 98 - 107 und S. 116 - 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl) propionate) (Irganox® 1010). Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des TPU. Bevorzugt werden die TPU zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001, Seite 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin® 213, Tinuvin® 328, Tinuvin$^{e}$ 571, sowie Tinuvin® 384 und das Eversorb®82. Bevorzugt werden die UV-Absorber in Mengen zwischen 0,01 und 5 Gew.-%, bezogen auf die Gesamtmasse TPU zudosiert, besonders bevorzugt zwischen 0,1 und 2,0 Gew.-%, insbesondere zwischen 0,2 und 0,5 Gew.-%, jeweils bezogen auf das Gesamtgewicht des TPU. Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponente (e) bevorzugt zusätzlich zu dem Antioxidans und dem UV-Absorber, noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere. HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123 - 136. Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen bevorzugt nicht größer als 10000 g/mol, besonders bevorzugt nicht größer als 5000 g/mol sein. Besonders bevorzugte Hindered Amine Light Stabilizer sind bis-(1,2,2,6,6-pentamethylpiperidyl) sebacat (Tinuvin® 765, Ciba Spezialitätenchemie AG) und, das Kondensationsprodukt aus 1-hydroxyethyl-2,2,6,6-tetramethyl-4-hydroxypiperidine and succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des Produktes < 150 ppm, bevorzugt < 50 ppm insbesondere bevorzugt < 10 ppm ist. HALS Verbindungen werden bevorzugt in einer Konzentration zwischen 0,01 und 5 Gew.-% eingesetzt, besonders bevorzugt zwischen 0,1 und 1 Gew.-%, insbesondere zwischen 0,15 und 0,3 Gew.-%, jeweils bezogen auf das

Gesamtgewicht des TPU. Eine besonders bevorzugte UV Stabilisierung enthält eine Mischung aus einem phenolischen Stabilisator, einem Benzotriazol und einer HALS-Verbindung in den oben beschriebenen bevorzugten Mengen.

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Kennzahlen erfolgen, bevorzugt bei einer Kennzahl zwischen 950 und 1050, besonders bevorzugt bei einer Kennzahl zwischen 970 und 1010, insbesondere zwischen 980 und 995. Die Kennzahl ist definiert durch das molare Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 1000 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 1000 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozeß erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z. B. bei Temperaturen von 100 C bis 280°C, vorzugsweise 140°C bis 250°C zur Reaktion gebracht, das erhaltene TPU wird extrudiert, abgekühlt und granuliert.

Aufgrund ihrer besonders guten Haftung sind TPU gemäß der WO 03/014179, sowohl zur Herstellung der Konzentrate (i) als auch zum Mischen mit dem Konzentrat (i) bevorzugt geeignet. Die nachfolgenden Ausführungen bis zu den Beispielen beziehen sich auf diese besonders bevorzugten TPU.

Diese besonders bevorzugten TPU sind bevorzugt erhältlich durch Umsetzung von (a) Isocyanaten mit (b1) Polyesterdiolen mit einem Schmelzpunkt größer 150 °C, (b2) Polyetherdiolen und/oder Polyesterdiolen jeweils mit einem Schmelzpunkt kleiner 150°C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt. Besonders bevorzugt sind thermoplastische Polyurethane, bei denen die Polyesterdiole (b1), die bevorzugt ein Molekulargewicht von 1000 g/mol bis 5000 g/mol besitzen, die folgende Struktureinheit (I) aufweisen:

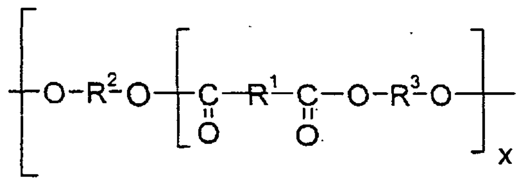

mit den folgenden Bedeutungen für R1, R2, R3 und X:

R1: Kohlenstoffgerüst mit 2 bis 15 Kohlenstoffatomen, bevorzugt eine Alkylengruppe mit 2 bis 15 Kohlenstoffatomen und/oder ein bivalenter aromatischer Rest mit 6 bis 15 Kohlenstoffatomen, besonders bevorzugt mit 6 bis 12 Kohlenstoffatomen

R2: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere $-CH_2-CH_2-$ und/oder $-CH_2-CH_2-CH_2-CH_2-$,

R3: gegebenenfalls verzweigtkettige Alkylengruppe mit 2 bis 8 Kohlenstoffatomen, bevorzugt 2 bis 6, besonders bevorzugt 2 bis 4 Kohlenstoffatomen, insbesondere $-CH_2-CH_2-$ und/oder $-CH_2-CH_2-CH_2-CH_2-$,

X: eine ganze Zahl aus dem Bereich 5 bis 30. Der eingangs dargestellte bevorzugte Schmelzpunkt und/oder das bevorzugte Molekulargewicht beziehen sich bei dieser bevorzugten Ausführungsform auf die dargestellte Struktureinheit (I).

Unter dem Ausdruck "Schmelzpunkt" ist in dieser Schrift das Maximum des Schmelzpeaks einer Aufheizkurve zu verstehen, die mit einem handelsüblichen DSC-Gerät (z. B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man in einem ersten Schritt (I) einen, bevorzugt hochmolekularen, bevorzugt teilkristallinen, thermoplastischen Polyester mit einem Diol (c) umsetzt und anschließend in einer weiteren Umsetzung (II) das Umsetzungsprodukt aus (I) enthaltend (b1) Polyesterdiol mit einem Schmelzpunkt größer 150°C sowie gegebenenfalls (c) Diol zusammen mit (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (II) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (I) die Hartphasen durch den im Schritt (I) eingesetzten Polyester für das Endprodukt zur Verfügung gestellt werden, erfolgt durch den Einsatz der Komponente (b2) im Schritt (II) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden PolyEsterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d.h. vor der Umsetzung (I) mit dem Diol (c), bevorzugt ein Molekulargewicht von 15000 g/mol bis 40000 g/mol sowie bevorzugt einen Schmelzpunkt von größer 160°C, besonders bevorzugt von 170°C bis 260°C auf.

Als Ausgangsprodukt, d.h. als Polyester, der in dem Schritt (I) bevorzugt in geschmolzenem Zustand besonders bevorzugt bei einer Temperatur von 230°C bis 280°C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphätischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylentrephthaiat, Polybutylenterephthalat, insbesondere Polybutylenterephthalat.

Die. Herstellung dieser Ester aus den genannten Ausgangsstoffen ist dem Fachmann allgemein bekannt und vielfach beschrieben. Geeignete Polyester sind zudem kommerziell erhältlich

Den thermoplastischen Polyester schmilzt man bevorzugt bei einer Temperatur von 180°C bis 270°C auf. Die Umsetzung (I) mit dem Diol (c) führt man bevorzugt bei einer Temperatur von 230°C bis 280°C, bevorzugt 240°C bis 280°C durch.

Als Diol (c) können in dem Schritt (I) zur Umsetzung mit dem thermoplastischen Polyester und gegebenenfalls im Schritt (II) allgemein bekannte Diole mit einem Molekulargewicht von 62 bis 500 g/mol eingesetzt werden, beispielsweise die an späterer Stelle genannten, z.B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (I) beträgt üblicherweise 100 : 1,0 bis 100 : 10, bevorzugt 100 : 1,5 bis 100 : 8,0.

Die Umsetzung des thermoplastischen Polyesters mit dem Diol (c) in dem Umsetzungsschritt (I) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (I) in Gegenwart von 0,1 bis 2 Gew.-% Katalysatoren; bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (I) in Frage: Tetrabutylorthotitanat und/oder Zinn-(II)-Dioctoat, bevorzugt Zinn-dioctoat.

Das Polyesterdiol (b1) als Umsetzungsprodukt aus (I) weist bevorzugt ein Molekulargewicht von 1000 g/mol bis 5000 g/mol auf. Der Schmelzpunkt des Polyesterdiols als Umsetzungsprodukt aus (I) beträgt bevorzugt 150°C bis 260°C, insbesondere 165°C bis 245°C, d.h. dass das Umsetzungsprodukt des thermoplastischen Polyesters mit dem Diol (c) im Schritt (I) Verbindungen mit dem genannten Schmelzpunkt enthält, die in dem anschließenden Schritt (II) eingesetzt werden.

Durch die Umsetzung des thermoplastischen Polyesters mit dem Diol (c) in dem Schritt (I) wird die Polymerkette des Polyesters durch das Diol (c) durch Umesterung gespalten. Das Umsetzungsprodukt des thermoplastischen Polyesters weist deshalb freie Hydroxylendgruppen auf und wird bevorzugt in dem weiteren Schritt (II) zu dem eigentlichen Produkt, dem TPU, weiterverarbeitet.

Die Umsetzung des Reaktionsproduktes aus dem Schritt (I) in dem Schritt (II) erfolgt bevorzugt durch Zugabe von a) Isocyanat (a) sowie (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (I). Die Umsetzung von dem Reaktionsprodukt mit dem Isocyanat erfolgt über die in dem Schritt (I) entstandenen Hydroxylendgruppen. Die Umsetzung in dem Schritt (II) erfolgt bevorzugt bei einer Temperatur von 190°C bis 250°C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (I) durchgeführt wurde. Beispielsweise kann die Umsetzung des Schrittes (I) in den ersten Gehäusen eines üblichen Reaktionsextruders erfolgen und an späterer Stelle, d.h. späteren Gehäusen, nach der Zugabe der Komponenten (a) und (b2), die entsprechende Umsetzung des Schrittes (II) durchgeführt werden. Beispielsweise können die ersten 30 bis 50 % der Länge des Reaktionsextruders für den Schritt (I) verwendet und die restlichen 50 bis 70 % für den Schritt (II) eingesetzt werden.

Die Umsetzung in dem Schritt (II) erfolgt bevorzugt bei einem Überschuss der Isocyanatgruppen zu den gegenüber Isocyanaten reaktiven Gruppen. Bevorzugt beträgt in der Umsetzung (II) das Verhältnis der Isocyanatgruppen zu den Hydroxylgruppen 1 : 1 bis 1,2 : 1, besonders bevorzugt 1,02 : 1 bis 1,2 : 1.

Bevorzugt führt man die Umsetzungen (I) und (II) in einem allgemein bekannten Reaktionsextruder durch. Derartige Reaktionsextruder sind beispielhaft in den Firmenschriften von Werner & Pfleiderer oder in der DE-A 2 302 564 beschrieben.

Bevorzugt wird das bevorzugte Verfahren derart durchgeführt, dass man in das erste Gehäuse eines Reaktionsextruders mindestens einen thermoplastischen Polyester, z.B. Polybutylenterephthalat, dosiert und bei Temperaturen bevorzugt zwischen 180°C bis 270°C, bevorzugt 240°C bis 270°C aufschmilzt, in ein nachfolgendes Gehäuse ein Diol (c), z.B. Butandiol, und bevorzugt einen Umesterungskatalysator zugibt, bei Temperaturen zwischen 240°C bis 280°C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190°C bis 250°C den Aufbau zu den bevorzugten thermoplastischen Poly-urethanen durchführt.

Bevorzugt werden im Schritt (II) mit Ausnahme der im Umsetzungsprodukt von (I) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguss mit Zykluszeiten kleiner 35s verarbeitbar sind. Auch in der Extrusion, z. B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d.h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (I), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (I) bezogen sind.

Die bevorzugten thermoplastischen Polyurethane weisen bevorzugt eine Härte von Shore 45 A bis Shore 78 D, besonders bevorzugt 50 A bis 75 D auf.

Bevorzugt weisen die bevorzugten thermoplastischen Polyurethane die folgende Struktureinheit (II) auf:

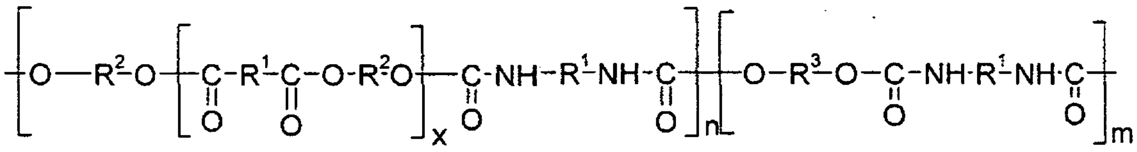

mit den folgenden Bedeutungen für R1, R2, R3 und X:

R1: Kohlenstoffgerüst mit 2 bis 15 Kohlenstoffatomen, bevorzugt eine Alkylengruppe mit 2 bis 15 Kohlenstoffatomen und/oder ein aromatischer Rest mit 6 bis 15 Kohlenstoffatomen,

R2: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH2-CH2- und/oder -CH2-CH2-CH2-CH2-,

R3: Rest, der sich aus durch den Einsatz von Polyetherdiolen und/oder Polyesterdiolen mit jeweils Molekulargewichten zwischen 501 g/mol und 8000 g/mol als (b2) oder durch den Einsatz von Alkandiolen mit 2 bis 12 Kohlenstoffatomen für die Umsetzung mit Diisocyanaten ergibt,

X: eine ganze Zahl aus dem Bereich 5 bis 30,
n, m: eine ganze Zahl aus dem Bereich 5 bis 20.

Der Rest R1 wird durch das eingesetzte Isocyanat definiert, der Rest R2 durch das Umsetzungsprodukt des thermoplastischen Polyesters mit dem Diol (c) in (I) und der Rest R3 durch die Ausgangskomponenten (b2) und gegebenenfalls (c) bei der Herstellung der TPU.

Beispiele

In den nachfolgend beschriebenen Beispielen wurden folgende Isocyanate und thermoplastische Polyurethane (TPU) verwendet:

Isocyanate:

| | |
|---|---|
| Lupranat® MM 103 | Carbodiimid-modifiziertes 4,4'-Diphenylmethandiisocyanat (MDI) ;<br>NCO-Gehalt: 29,5 Gew.-% |
| Lupranat® MP 102: | Prepolymer auf Basis MDI, Dipropylenglykol und einem Polyetherdiol auf Basis Ethylenoxid/Propylenoxid mit Molgewicht 450;<br>NCO-Gehalt: 23,0 Gew.-% |
| Basonat® H 100: | trimerisiertes Hexamethylendiisocyanat;<br>NCO-Gehalt: 22,0 Gew.-% |

Thermoplastische Polyurethane(TPU):

| | |
|---|---|
| Elastollan® C 78 A, C 80 A, C 85 A: | Polyester-Polyurethane auf Basis MDI, Butandiol-1,4 als Kettenverlängerer und Polyesterdiol (Butandiol-Hexandiol-Adipinsäure-copolyester) mit Molgewicht 2000. |
| Elastollan® 1195 A, 1154 D, 1174 D: | Polyether-Polyurethane auf Basis MDI, Butandiol-1,4 als Kettenverlängerer und Polytetramethylenglykol mit Molgewicht 1000. |

(fortgesetzt)

| | |
|---|---|
| Elastollan® C 85 A 15 HPM: | Hartphasenmodifiziertes Polyester-Polyurethan auf Basis MDI, Butandiol-1,4, Polyesterdiol wie bei Elastollan® C-Typen und einem Polybutylenterephthalat-Segment als Hartphase. |

Beispiel 1

Zur Herstellung der erfindungsgemäßen thermoplastischen Polyurethane (I) gemäß Anspruch 1 wurde ein Doppelwellen-extruder Typ ZE 40. A der Fa. Berstorff verwendet mit einer Verfahrensteillänge von 35 D, unterteilt in 10 Gehäuse. Die Schneckenelementanordnung wies in Gehäuse 2 zwei rückwärts fördernde Knetblöcke als Aufschmelzeinheit für das TPU-Granulat auf. Gehäuse 3 enthielt eine Möglichkeit der Zugabe von flüssigen Isocyanaten zur TPU-Schmelze. Gehäuse 3, 6 und 7 wiesen zusätzlich zu üblichen Förderelementen Mischelemente in Form von Zahnscheibenblöcken auf.

Die Gehäusetemperaturen wurden zunächst alle auf 210°C eingestellt und 15.0 kg/h Elastollan® C 85 A-Granulat kontinuierlich per gravimetrischer Dosierung in Gehäuse 1 zugegeben. Danach wurden 5.0 kg/h Lupranat® MM 103 mittels Zahnradpumpe und gravimetrischer Dosierung In Gehäuse 3 kontinuierlich in die TPU-Schmelze eingetragen und in den nachfolgenden Gehäusen intensiv eingemischt. Nach der Zugabe von Lupranat® MM 103 wurden ab Gehäuse 4 alle weiteren Gehäusetemperaturen auf 150°C abgesenkt. Nachdem die am Extruderdüsenkopf austretenden, optisch klaren Schmelzstränge Temperaturen von 150-160°C erreicht hatten, wurden sie in einem Wasserbad abgekühlt, über eine Absaugvorrichtung von anhaftendem Wasser befreit und in üblicher Weise granuliert. Es resultierte ein hartes, gut kristallisierendes und nicht verklebendes Granulat, dass ohne Nachtrocknung verwendet werden konnte (Konzentrat Nr. 1).

Beispiel 2: ,

Mit dem gleichen Extruderaufbau und der gleichen Fahrweise wurden 12.0 kg/h Elastollan C 85 A mit 8.0 kg/h eines flüssigen isocyanatgemisches aus 80% Lupranat® MP 102 und 20% Basonat® H 100 gemischt und granuliert. (Konzentrat Nr. 2)

Tabelle 1:

| Konzentrat | Zusammensetzung | NCO-Gehalt (Gew.-%) | |
|---|---|---|---|
| | | Theoretisch | Gefunden |
| Nr.1 | EC 85 A + 25% Lupranat® MM 103 | 7,5 | 7,0 |
| Nr. 2 | EC 85 A + 32% Lupranat® MP 102 + 8% Basonat® M 100 | 9,1 | 8,7 |

Der analytisch bestimmte, erniedrigte NCO-Gehalt erklärt sich aus dem Umstand, dass am Granulat verbleibendes Wasser in der Größenordnung von 0,05-0,15 Gew.-% durch Reaktion mit NCO-Gruppen zu einer Reduzierung des NCO-Gehaltes führt.

Beispiel 3:

Zur Herstellung der erfindungsgemäßen thermoplastischen Polyurethane (i) gemäß Anspruch 1 wurde ein Doppelwellenextruder Typ ZSK 58 der Fa. Werner & Pfleiderer mit einer Verfahrensteillänge von 48 D, unterteilt in 12 Gehäuse, verwendet. Der Schmelzeaustrag aus dem Extruder erfolgte mittels einer beheizten Zahnradpumpe, die Granulierung mittels einer üblichen Unterwassergranuliereinrichtung (UWG). Die Schneckenelementanordnung entsprach der Anordnung, wie sie in Beispiel 1 beschrieben wurde.

Sämtliche Gehäusetemperaturen wurden zunächst auf 210°C eingestellt und 75,0 kg/h Elastollan® C 85 A kontinuierlich gravimetrisch in Gehäuse 1 zudosiert, aufgeschmolzen, über die ebenfalls auf 210°C beheizte Zahnradpumpe aus dem Extruder ausgetragen und in der UWG granuliert zwecks Bestimmung des Molgewichtes des extrudierten EC 85 A-Materials.

Danach wurden 75,0 kg Lupranat® MP 102 kontinuierlich gravimetrisch in Gehäuse 5 zur TPU-Schmelze zugegeben, eingemischt und ohne Temperaturerniedrigung ausgetragen. Eine Unterwassergranulierung war wegen der außerordentlich niedrigen Schmelzeviskosität nicht möglich. Es wurde jedoch eine Probe genommen, um den Molgewichtsabbau zu bestimmen (Konzentrat-Nr.3)

Anschließend wurden die Gehäusetemperaturen nach Gehäuse 5 und die Temperaturen der Zahnradpumpe

auf 140°C erniedrigt. Nachdem die austretende, optisch klare Schmelze ebenfalls Temperaturen von 140-145°C erreicht hatte, war eine problemlose Unterwassergranulierung möglich. Das anfallende Granulat wurde in einer Zentrifuge von oberflächlich anhaftendem Wasser befreit und ohne weitere Trocknung gesammelt (Konzentrat-Nr.4).

Tabelle 2:

| Konzentrat | Zusammensetzung | NCO-Gehalt (Gew.-%) | | Molgewicht Mn Dalton |
|---|---|---|---|---|
| | | Theoretisch | Gefunden | |
| | EC 85 A extrudiert mit Schmelzetemperatur 210°C | - | 0,10 | 34900 |
| Nr. 3 | EC 85 A + 50% Lupranat® MP 102 extrudiert mit Schmelzetemperatur 210°C | 11,5 | 10,8 | 15000 |
| Nr. 4 | EC 85 A + 50% Lupranat® MP 102 extrudiert mit Schmelzetemperatur 140°C | 11,5 | 9,9 | 33100 |

Die Molgewichte Mn wurden in üblicher Weise mittels Gelpermeationschromatographie bestimmt mit Dimethylformamid als Lösungsmittel/Laufmittel und Massenkalibrierung mit eng verteiltem Polymethylmethacrylat.

Beispiel 4:

Elastollan® C 80 A 10-Granulat wurde mit Granulaten von Konzentrat-Nr.1 und Konzentrat-Nr.4 gemischt, diese Granulatmischungen im Spritzguss in üblicher Weise zu Testplatten verarbeitet, die Testplatten 20 Std. bei 100°C getempert und die mechanischen Eigenschaften bestimmt.

Um die Lagerbeständigkeit derart isocyanatreicher Konzentrate zu überprüfen, wurde nach 4 Monaten Lagerzeit des Konzentrates-Nr.4 eine vergleichbare Mischungsreihe mit Elastollan® C 80 A 10 durchgeführt.

Die Ergebnisse sind in Tabelle 3 beschrieben.

Tabelle 3:

| | | | Konzentrat-Nr.1 | | | | | Konzentrat-Nr.4 | | | | Konzentrat-Nr.4 nach 4-monatiger Lagerzeit | | | |
|---|---|---|---|---|---|---|---|---|---|---|---|---|---|---|---|
| Mischungsanteil (Gew.-%) | | | 0 | 4 | 5 | 6 | 8 | 4 | 5 | 6 | 8 | 4 | 5 | 6 | 8 |
| Eigenschaft | Einheit | Prüfvorschrift | | | | | | | | | | | | | |
| Härte | Shore | DIN 53 505 | 83 A | 84 A | 84 A | 84 A | 84 A | 82 A | 83 A | 83 A | 84 A | 83 A | 84 A | 84 A | 85 A |
| Dichte | g/cm3 | DIN EN ISO 1183-1 | 1,181 | 1,182 | 1,184 | 1,185 | 1,186 | 1,184 | 1,184 | 1,184 | 1,186 | 1,184 | 1,184 | 1,184 | 1.186 |
| Zugfestigkeit | MPa | DIN 53 504 | 47 | 48 | 50 | 52 | 51 | 50 | 51 | 56 | 51 | 48 | 49 | 51 | 48 |
| Reißdehnung | % | DIN 53 504 | 620 | 560 | 550 | 530 | 540 | 520 | 520 | 540 | 500 | 540 | 510 | 500 | 490 |
| Abrieb | $mm^3$ | DIN 53 516 | 32 | 30 | 31 | 32 | 30 | 28 | 30 | 32 | 30 | 30 | 32 | 29 | 33 |
| Druckverformungsrest<br>72h/23°C<br>24h/70°C<br>24h/100°C | % | DIN ISO 815 | 19<br>31<br>55 | 17<br>29<br>50 | 18<br>26<br>47 | 19<br>27<br>39 | 19<br>25<br>39 | 17<br>26<br>44 | 16<br>21<br>40 | 16<br>21<br>38 | 20<br>20<br>37 | 20<br>26<br>48 | 17<br>26<br>45 | 18<br>26<br>43 | 18<br>24<br>41 |
| Vicat A 120 | °C | DIN EN ISO 306 | 110 | 125 | 130 | 134 | 136 | 129 | 130 | 132 | 136 | 125 | 126 | 127 | 133 |

Die Veränderung der mechanischen Eigenschaften durch den Zusatz der Isocyanat-Konzentrate betreffen die Reduzierung der Reißdehnung, eine Absenkung der Druckverformungsrest-Werte, insbesondere bei 100°C, und eine Erhöhung der Wärmeformbeständigkeit, gemessen nach VICAT A 120.
Diese Effekte beruhen auf einer Vernetzung des Elastolfan® C 85 A 10 durch Isocyanat-Zusatz.
Des weiteren zeigte der Vergleich der Effekte von Konzentrat-Nr.4 und Konzntrat-Nr.4 nach 4-monatiger Lagerung, dass die erfindungsgemäßen thermoplastischen Polyurethane (i) bei sachgemäßer Lagerung ohne Wirkungsverlust haltbar sind.

Beispiel 5:

Elastollan® C 85 A 15 HPM-Granulat wurde in gleicher Weise, wie in Beispiel 4 beschreiben, mit Konzentrat-Nr.4 gemischt, verarbeitet und geprüft.

Tabelle 4:

| Mengenanteil (Gew.-%) | | | Konzentrat-Nr.4 | | | | |
|---|---|---|---|---|---|---|---|
| | | | 0 | 4 | 5 | 6 | 8 |
| Eigenschaft | Einheit | Prüfvorschrift | | | | | |
| Härte | Shore | DIN 53 505 | 84 A | 86 A | 86 A | 87 A | 87 A |
| Dichte | $g/cm^3$ | DIN EN ISO 1183-1 | 1,194 | 1,196 | 1,196 | 1,198 | 1,198 |
| Zugfestigkeit | MPa | DIN 53 504 | 35 | 41 | 43 | 43 | 45 |
| Reißdehnung | % | DIN 53 504 | 750 | 730 | 680 | 640 | 600 |
| Abrieb | $mm^3$ | DIN 53 516 | 40 | 35 | 33 | 30 | 34 |
| Druckverformungsrest<br>72h/23°C<br>24h/70°C<br>24h/100°C | % | DIN ISO 815 | 15<br>25<br>50 | 17<br>28<br>42 | 18<br>26<br>45 | 16<br>27<br>43 | 18<br>23<br>46 |
| Vicat A 120 | °C | DIN EN ISO 306 | 120 | 134 | 136 | 138 | 142 |

Die Ergebnisse zeigen, dass die Wirkungsweise der erfindungsgemäßen Polyurethane (i) beim Zusatz zu hartphasenmodifiziertem TPU vergleichbar sind mit den Effekten bei Verwendung von TPU mit einer Struktur gemäß den Elastollan® C-Typen.

Beispiel 6:

Konzentrat-Nr.4, erhalten nach Beispiel 3, wurde in einem Extruder mit genuteter Einzugszone, Verfahrensteillänge 32 D und einer Barriere-Mischteilschnecke als Granulatmischung mit Elastollan® 1195 A und Elastollan® 1154 D zudosiert, aufgeschmolzen, gemischt und als Schlauch extrudiert. Es wurden Extrudate mit glatter Oberfläche erhalten.
Zur Bestimmung des Vemetzungsgrades wurden Elastollan® 1195 A und 1154 D ohne Zusatz von Konzentrat-Nr.4 in gleicher Weise extrudiert. Von den Extrudaten wurden ca. 4 g in 50 ml Dimethylformamid 14 Std. lang gerührt und anschließend die löslichen Anteile bestimmt.

Tabelle 5:

| Konzentrat-Nr.4 Mischungsanteil (Gew.-%) | Elastollan®-Typ | lösliche Anteile (Gew.-%) |
|---|---|---|
| 0 | 1195 A | 100 % |
| 8 | 1195 A | 60 % |
| 0 | 1154 D | 100 % |
| 8 | 1154 D | 55 % |

Beispiel 7:

Elastollan® 1174 D wurde in üblicher Weise im Spritzguss zu Platten verarbeitet. Diese Platten wurden dann während 2 Min. bei 180°C mit einer Thermotransfer-Farbfolie (aminhaltig) bedruckt und wieder abgekühlt. Die so präparierten Platten wurden anschließend 3 Tage bei 80°C gelagert. An Querschnitten dieser Platten wurden mittels Lichtmikroskopie eine Diffusion der Farbe von ca. 800 μm bestimmt. Das Druckbild war nach der Wärmelagerung verschwommen.

Beispiel 8:

Elastollan® 1174 D mit Zusatz von 5 % Konzentrat-Nr.4, erhalten nach Beispiel 3, wurde ebenfalls als Granulatmischung im Spritzguss zu Platten verarbeitet, mit Thermotransfer-Farbfolie bedruckt und 3 Tage bei 80°C gelagert in gleicher Weise, wie in Beispiel 7 beschrieben wurde.

An Querschnitten dieser Platten wurde mittels Lichtmikroskopie eine Diffusion der Farbe von ca. 300 μm bestimmt. Das Druckbild war auch nach der Wärmelagerung scharf und nicht verlaufen.

Beispiel 9:

Auf einer 2-Komponenten-Spritzgussmaschine wurde Ultramid® B3, ein Polyamid 6 der Fa. BASF, zu einer Platte mit den Abmessungen 4 x 65 x 130 mm geformt und anschließend Elastollan® C 78 A 10 als weiche Komponente an diese harte Ultramid® B3-Platte angespritzt in der Weise, dass die beiden gleich großen Platten an der Querschnittsfläche 4 x 130 mm miteinander verbunden waren. Aus diesen Platten wurden Prüfstäbe S1 gemäß DIN 53 504 gefräst, sodass die Grenzfläche genau in der Mitte des S1-Stabes zu liegen kam.

Die Zugfestigkeit, d.h., die Haftfestigkeit zwischen Ultramid® B3 und Elastollan® C 78 A 10, wurde dann gemäß DIN 53 504 geprüft.

Die gleiche Vorgehensweise wurde auch durchgeführt für Granulatabmischungen aus Elastollan® C 78 A 10 und Konzentrat-Nr.4 als Weichkomponente zum Anspritzen an Ultramid® B3.

Tabelle 6:

| Weichkomponente | | Haftfestigkeit (MPa) | |
|---|---|---|---|
| | | ungetempert | getempert 20h/100°C |
| C 78 A 10 | ohne Zusatz | 7,5 | 10,0 |
| C 78 A 10 | +1% Konzentrat-Nr.4 | 8,0 | 10,8 |
| C 78 A 10 | +2% Konzentrat-Nr.4 | 8,5 | 11,5 |
| C 78 A 10 | +3% Konzentrat-Nr.4 | 9,2 | 13,5 |
| C 78 A 10 | +4% Konzentrat-Nr.4 | 9,6 | 16,7 |

Wie aus den Ergebnissen zu ersehen ist, können Haftfestigkeiten eines Verbundes aus hartem Polyamid 6 und weichem TPU durch Zusatz der erfindungsgemäßen thermoplastischen Polyurethane (i) wesentlich verbessert werden. Ähnliche Steigerungen können erzielt werden, wenn als Hartkomponente Polybutylenterephthalat, Polyethylenterephthalat, Polycarbonat, ABS-Kunststoffe u.a. m. verwendet werden.

**Patentansprüche**

1. Thermoplastisches Polyurethan (i) in Form eines Granulats, enthaltend zwischen 20 Gew.-% und 70 Gew.-% Isocyanat gelöst in dem thermoplastischen Polyurethan, bezogen auf das Gesamtgewicht des thermoplastischen Polyurethans (i) enthaltend die Isocyanate, herstellbar durch ein Verfahren, bei dem man das thermoplastische Polyurethan bei Temperaturen zwischen 170 und 240 °C aufschmilzt und anschließend in diese Schmelze das Isocyanat mit Temperaturen zwischen 20 und 80 °C zumischt, so dass die resultierende Mischung eine Temperatur zwischen 120 und 160 °C aufweist.

2. Thermoplastisches Polyurethan (i) gemäß Anspruch 1, **dadurch gekennzeichnet, dass** der NCO-Gehalt des thermoplastischen Polyurethans (i) enthaltend das Isocyanat grösser als 5 % ist.

3. Thermoplastisches Polyurethan (i) gemäß Anspruch 1, **dadurch gekennzeichnet, dass** als Isocyanat 2,2'-, 2,4'- und/oder 4,4'-Diphenylmethandiisocyanat (MDI), ein Carbodiimid-modifiziertes 2,2'-, 2,4'- und/oder 4,4'- Diphenylmethandiisocyanat (MDI), ein Prepolymer auf der Basis von 2,2'-, 2,4'- und/oder 4,4'-Diphenylmethandiisocyanat (MDI), Biuretund/oder Isocyanuratgruppen aufweisende Isocyanate in dem thermopfastischen Polyurethan (i) vorliegen.

4. Thermoplastisches Polyurethan (i) gemäß Anspruch 1, **dadurch gekennzeichnet, dass** als Isocyanat Carbodiimid-modifiziertes 4,4'-Diphenyimethandiisocyanat (MDI), Prepolymer auf Basis Ethylenoxid/Propylenoxid und/oder trimerisiertes Hexamethylendiisocyanat in dem thermoplastischen Polyurethan (i) vorliegen.

5. Thermoplastisches Polyurethan (i) gemäß Anspruch 1, **dadurch gekennzeichnet, dass** das thermoplastische Polyurethan, in das das Isocyanat gelöst wird, vor der Einarbeitung des Isocyanates eine Shore-Härte zwischen 80 A und 60 D aufweist.

6. Verfahren zur Herstellung eines thermoplastischen Polyurethans (i) enthaltend Isocyanat gemäß einem der Ansprüche 1 bis 5, **dadurch gekennzeichnet, dass** man thermoplastisches Polyurethan schmilzt und anschließend in die Schmelze das Isocyanat einarbeitet, wobei man thermoplastisches Polyurethan bei Temperaturen zwischen 170 und 240 °C aufschmilzt und anschließend in diese Schmelze das Isocyanat mit Temperaturen zwischen 20 und 80 °C zumischt, so dass die resultierende Mischung eine Temperatur zwischen 120 und 160 °C aufweist.

7. Verfahren gemäß Anspruch 6, **dadurch gekennzeichnet, dass** man das Isocyanat mittels eines Extruders in das thermoplastische Polyurethan einarbeitet.

8. Verfahren gemäß Anspruch 7, **dadurch gekennzeichnet, dass** man das Isocyanat mittels eines Zweiwellenextruders in das thermoplastische Polyurethan einarbeitet.

9. Verfahren gemäß Anspruch 7, **dadurch gekennzeichnet, dass** man das aus dem Extruder erhältliche Produkt, d.h. das thermoplastische Polyurethan (i) enthaltend Isocyanat direkt nach dem Austreten aus der Düse des Extruders in einem Wasserbad abkühlt und den erhaltenen Strang anschließend granuliert.

10. Verfahren gemäß Anspruch 7, **dadurch gekennzeichnet, dass** man das aus dem Extruder erhältliche Produkt, d.h. die TPU Schmelze (i) enthaltend das Isocyanat, durch eine Mehrlochdüse direkt vom Extruder in ein Wasserbad auspresst und anschließend mit einem rotierenden Messer zerteilt.

11. Verfahren zur Herstellung von Polyurethanen durch Umsetzung von (a) Isocyanaten mit (b) gegenüber Isocyanaten reaktiven Verbindungen, **dadurch gekennzeichnet, dass** man die Herstellung in Gegenwart von thermoplastischen Polyurethanen (i) gemäß einem der Ansprüche 1 bis 5 durchführt.

12. Verfahren zur Umsetzung von thermoplastischen Polyurethanen mit Isocyanat, **dadurch gekennzeichnet, dass** man als Isocyanat thermoplastisches Polyurethan (i) enthaltend Isocyanate gemäß einem der Ansprüche 1 bis 5 einsetzt.

13. Verfahren nach Anspruch 12, **dadurch gekennzeichnet, dass** man pro 100 Gew.-Teile thermoplastisches Polyurethan zwischen 1 und 70 Gew.-Teile thermoplastisches Polyurethan (i) enthaltend Isocyanate gemäß einem der Ansprüche 1 bis 5 einsetzt.

14. Verfahren nach Anspruch 12, **dadurch gekennzeichnet, dass** man das thermoplastische Polyurethan (i) gemeinsam mit dem thermoplastischen Polyurethan in einen Extruder einführt und schmilzt.

15. Verfahren zum Spritzgießen von thermoplastischem Polyurethan, **dadurch gekennzeichnet, dass** man thermoplastisches Polyurethan gemeinsam mit thermoplastischem Polyurethan (i) enthaltend Isocyanate gemäß einem der Ansprüche 1 bis 5 spritzgießt.

16. Verfahren zum Spritzgießen von thermoplastischem Polyurethan nach Anspruch 15, **dadurch gekennzeichnet, dass** man im Zwei-Komponenten-Spritzguss thermoplastisches Polyurethan gemeinsam mit thermoplastischem Polyurethan (i) enthaltend Isocyanate gemäß einem der Ansprüche 1 bis 5 als eine Komponente spritzgießt.

17. Spritzgussartikel erhältlich durch ein Verfahren gemäß Anspruch 15 oder 16.

18. Extrusionsartikel erhältlich durch ein Verfahren gemäß Anspruch 12 bis 14.

19. Folien erhältlich durch ein Verfahren gemäß einem der Ansprüche 12 bis 14.

## Claims

1. A thermoplastic polyurethane (i) in the form of pellets, comprising from 20% by weight to 70% by weight of isocyanate dissolved in the thermoplastic polyurethane, based on the total weight of the thermoplastic polyurethane (i) comprising the isocyanates, producible by a process in which the thermoplastic polyurethane is melted at temperatures of from 170 to 240°C and the isocyanate at a temperature in the range from 20 to 80°C is subsequently mixed into this melt so that the resulting mixture has a temperature in the range from 120 to 160°C.

2. The thermoplastic polyurethane (i) according to claim 1, wherein the NCO content of the thermoplastic polyurethane (i) comprising the isocyanate is greater than 5%.

3. The thermoplastic polyurethane (i) according to claim 1, wherein diphenylmethane 2,2'-, 2,4'- and/or 4,4'-diisocyanate (MDI), a carbodiimide-modified diphenylmethane 2,2'-, 2,4'- and/or 4,4'-diisocyanate (MDI), a prepolymer based on diphenylmethane 2,2'-, 2,4'- and/or 4,4'-diisocyanate (MDI), isocyanates comprising biuret and/or isocyanurate groups are present as isocyanate in the thermoplastic polyurethane (i).

4. The thermoplastic polyurethane (i) according to claim 1, wherein carbodiimide-modified diphenylmethane 4,4'-diisocyanate (MDI), prepolymer based on ethylene oxide/propylene oxide and/or trimerized hexamethylene diisocyanate are present as isocyanate in the thermoplastic polyurethane (i).

5. The thermoplastic polyurethane (i) according to claim 1, wherein the thermoplastic polyurethane in which the isocyanate is dissolved has a Shore hardness of from 80 A to 60 D before incorporation of the isocyanate.

6. A process for producing a thermoplastic polyurethane (i) comprising isocyanate according to any of claims 1 to 5, wherein thermoplastic polyurethane is melted and the isocyanate is subsequently incorporated into the melt, wherein thermoplastic polyurethane is melted at temperatures of from 170 to 240°C and the isocyanate at a temperature in the range from 20 to 80°C is subsequently mixed into this melt so that the resulting mixture has a temperature in the range from 120 to 160°C.

7. The process according to claim 6, wherein the isocyanate is incorporated into the thermoplastic polyurethane by means of an extruder.

8. The process according to claim 7, wherein the isocyanate is incorporated into the thermoplastic polyurethane by means of a twin-screw extruder.

9. The process according to claim 7, wherein the product obtainable from the extruder, i.e. the thermoplastic polyurethane (i) comprising isocyanate, is cooled in a water bath immediately after leaving the die of the extruder and the strand obtained is subsequently pelletized.

10. The process according to claim 7, wherein the product obtainable from the extruder, i.e. the TPU melt (i) comprising the isocyanate, is extruded through a multihole dye directly from the extruder into a water bath and is subsequently cut up by means of a rotating knife.

11. A process for producing polyurethanes by reacting (a) isocyanates with (b) compounds which are reactive toward isocyanates, wherein the production is carried out in the presence of thermoplastic polyurethanes (i) according to any of claims 1 to 5.

12. A process for reacting thermoplastic polyurethanes with isocyanate, wherein a thermoplastic polyurethane (i) comprising isocyanates according to any of claims 1 to 5 is used as isocyanate.

13. The process according to claim 12, wherein from 1 to 70 parts by weight of thermoplastic polyurethane (i) comprising isocyanates according to any of claims 1 to 5 are used per 100 parts by weight of thermoplastic polyurethane.

**14.** The process according to claim 12, wherein the thermoplastic polyurethane (i) is introduced into an extruder and melted together with the thermoplastic polyurethane.

**15.** A process for injection molding thermoplastic polyurethane, wherein thermoplastic polyurethane is injection molded together with a thermoplastic polyurethane (i) comprising isocyanates according to any of claims 1 to 5.

**16.** The process for injection molding thermoplastic polyurethane according to claim 15, wherein thermoplastic polyurethane is injection molded by two-component injection molding together with a thermoplastic polyurethane (i) comprising isocyanates according to any of claims 1 to 5 as one component.

**17.** An injection-molded article obtainable by a process according to claim 15 or 16.

**18.** An extruded article obtainable by a process according to any of claims 12 to 14.

**19.** A film obtainable by a process according to any of claims 12 to 14.

**Revendications**

**1.** Polyuréthane thermoplastique (i) sous la forme d'un granulat, contenant entre 20 % en poids et 70 % en poids d'isocyanate dissous dans le polyuréthane thermoplastique, par rapport au poids total du polyuréthane thermoplastique (i) contenant les isocyanates, pouvant être fabriqué par un procédé selon lequel le polyuréthane thermoplastique est fondu à des températures comprises entre 170 et 240 °C, puis l'isocyanate est incorporé dans cette masse fondue à des températures comprises entre 20 et 80 °C, de sorte que le mélange résultant présente une température comprise entre 120 et 160 °C.

**2.** Polyuréthane thermoplastique (i) selon la revendication 1, **caractérisé en ce que** la teneur en NCO du polyuréthane thermoplastique (i) contenant l'isocyanate est supérieure à 5 %.

**3.** Polyuréthane thermoplastique (i) selon la revendication 1, **caractérisé en ce que** le diisocyanate de 2,2'-, 2,4'- et/ou 4,4'-diphénylméthane (MDI), un diisocyanate de 2,2'-, 2,4'- et/ou 4,4'-diphénylméthane (MDI) modifié par un carbodiimide, un prépolymère à base de diisocyanate de 2,2'-, 2,4'- et/ou 4,4'-diphénylméthane (MDI), des isocyanates comprenant des groupes biuret et/ou isocyanurate sont présents dans le polyuréthane thermoplastique (i) en tant qu'isocyanate.

**4.** Polyuréthane thermoplastique (i) selon la revendication 1, **caractérisé en ce qu'**un diisocyanate de 4,4'-diphénylméthane (MDI) modifié par un carbodiimide, un prépolymère à base d'oxyde d'éthylène/oxyde de propylène et/ou un diisocyanate d'hexaméthylène trimérisé sont présents dans le polyuréthane thermoplastique (i) en tant qu'isocyanate.

**5.** Polyuréthane thermoplastique (i) selon la revendication 1, **caractérisé en ce que** le polyuréthane thermoplastique dans lequel l'isocyanate est dissous présente avant l'incorporation de l'isocyanate une dureté Shore comprise entre 80 A et 60 D.

**6.** Procédé de fabrication d'un polyuréthane thermoplastique (i) contenant un isocyanate selon l'une quelconque des revendications 1 à 5, **caractérisé en ce qu'**un polyuréthane thermoplastique est fondu, puis l'isocyanate est incorporé dans la masse fondue, le polyuréthane thermoplastique fondant à des températures comprises entre 170 et 240 °C, puis l'isocyanate étant incorporé dans cette masse fondue à des températures comprises entre 20 et 80 °C, de sorte que le mélange résultant présente une température comprise entre 120 et 160 °C.

**7.** Procédé selon la revendication 6, **caractérisé en ce que** l'isocyanate est incorporé dans le polyuréthane thermoplastique au moyen d'une extrudeuse.

**8.** Procédé selon la revendication 7, **caractérisé en ce que** l'isocyanate est incorporé dans le polyuréthane thermoplastique au moyen d'une extrudeuse bivis.

**9.** Procédé selon la revendication 7, **caractérisé en ce que** le produit pouvant être obtenu à partir de l'extrudeuse, c.-à-d. le polyuréthane thermoplastique (i) contenant l'isocyanate, est refroidi directement après la sortie de la buse

de l'extrudeuse dans un bain d'eau, puis le filament obtenu est granulé.

**10.** Procédé selon la revendication 7, **caractérisé en ce que** le produit pouvant être obtenu à partir de l'extrudeuse, c.-à-d. la masse fondue de TPU (i) contenant l'isocyanate, est pressé par une buse à plusieurs trous directement depuis l'extrudeuse dans un bain d'eau, puis fragmenté avec une lame rotative.

**11.** Procédé de fabrication de polyuréthanes par mise en réaction de (a) des isocyanates avec (b) des composés réactifs avec les isocyanates, **caractérisé en ce que** la fabrication est réalisée en présence de polyuréthanes thermoplastiques (i) selon l'une quelconque des revendications 1 à 5.

**12.** Procédé de mise en réaction de polyuréthanes thermoplastiques avec un isocyanate, **caractérisé en ce qu'**un polyuréthane thermoplastique (i) contenant des isocyanates selon l'une quelconque des revendications 1 à 5 est utilisé en tant qu'isocyanate.

**13.** Procédé selon la revendication 12, **caractérisé en ce qu'**entre 1 et 70 parties en poids de polyuréthane thermoplastique (i) contenant des isocyanates selon l'une quelconque des revendications 1 à 5 sont utilisées pour 100 parties en poids de polyuréthane thermoplastique.

**14.** Procédé selon la revendication 12, **caractérisé en ce que** le polyuréthane thermoplastique (i) est introduit dans une extrudeuse et fondu conjointement avec le polyuréthane thermoplastique.

**15.** Procédé de moulage par injection d'un polyuréthane thermoplastique, **caractérisé en ce qu'**un polyuréthane thermoplastique est moulé par injection conjointement avec un polyuréthane thermoplastique (i) contenant des isocyanates selon l'une quelconque des revendications 1 à 5.

**16.** Procédé de moulage par injection d'un polyuréthane thermoplastique selon la revendication 15, **caractérisé en ce qu'**un polyuréthane thermoplastique est moulé par injection conjointement avec un polyuréthane thermoplastique (i) contenant des isocyanates selon l'une quelconque des revendications 1 à 5 dans un moulage par injection à deux composants.

**17.** Articles moulés par injection pouvant être obtenus par un procédé selon la revendication 15 ou 16.

**18.** Articles extrudés pouvant être obtenus par un procédé selon les revendications 12 à 14.

**19.** Films pouvant être obtenus par un procédé selon l'une quelconque des revendications 12 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4261946 A
- US 4347338 A
- DE 4115508 A
- DE 4412329 A
- EP 922719 A
- GB 2347933 A
- US 6142189 A
- EP 1158011 A
- EP 0531579 B1
- US 6063842 A
- WO 03014179 A
- DE 2302564 A


### In der Beschreibung aufgeführte Nicht-Patentliteratur


- Der Extruder im Extrusionsprozess - Grundlage für Qualität und Wirtschaftlichkeit. VDI-Verlag GmbH, 1989, 13-27
- Der Extruder im Extrusionsprozeß - Grundlage für Qualität und Wirtschaftlichkeit. VDI-Verlag GmbH, 1989, 107-125, 139-143
- **SIMON AMESÖDER et al.** *Kunststoffe,* 2003, vol. 9, 124-129
- Plastics Additive Handbook. Hanser Publishers, 2001
- Plastics Additive Handbook. Hanser Publishers, 2001, 98-107, 116-121
- Plastics Additive Handbook. Hanser Publishers, 2001, 116-122
- **H. ZWEIFEL.** Plastics Additive Handbook. Hanser Publishers, 2001, 123-136